# EUROPEAN PATENT SPECIFICATION

(11) **EP 3 348 505 B1**
(45) Date of publication and mention of the grant of the patent: **25.12.2019**
(21) Application number: 18151745.9
(22) Date of filing: 15.01.2018
(51) Int. Cl.: B66B 1/34

(54) **CONNECTION MANAGEMENT IN ELEVATOR COMMUNICATION SYSTEM AND METHOD**
VERBINDUNGSVERWALTUNG IN EINEM AUFZUGSKOMMUNIKATIONSSYSTEM UND VERFAHREN
GESTION DES CONNEXIONS DANS UN SYSTÈME DE COMMUNICATION D'ASCENSEUR ET PROCÉDÉ

(30) Priority: 13.01.2017 US 201715406292
(43) Date of publication of application: 18.07.2018
(73) Proprietor: Otis Elevator Company, Farmington, Connecticut 06032 (US)
(72) Inventor: NOXON, James Eugene, Eagan, Minnesota 55121 (US); JEFFERSON, Erik Wayne, Madison, WI 53713 (US); YANG, Lashia Michael, Madison, WI 53713 (US); KARDUCK, William Carl, Eagan, Minnesota 55121 (US)
(74) Representative: Dehns

(56) References cited:
- WO-A1-2016/117241
- US-A1- 2007 151 809

## Description

### BACKGROUND

Existing elevator systems typically require a user to step into a building lobby and interact with a system kiosk or the like to submit an elevator call (e.g., hall call or destination call). Unfortunately, significant wait times often result due to all patrons using the system kiosk(s).

US 2007/151809 discloses a method and apparatus for the input call needed in an elevator system by means of a wireless call input device.

### BRIEF SUMMARY

Disclosed is a communication system including an operating environment proximate a plurality of elevator car locations. Also included is at least one Bluetooth Low Energy (BLE) access point device connectable to a mobile device located within the operating environment upon receipt of a BLE signal by the mobile device, the mobile device permitting a single BLE access point device of the at least one BLE access point devices to connect to the mobile device at a time, for requesting an elevator assignment from the connected BLE access point device, the BLE access point devices each being a BLE central communication device and the mobile device being a BLE peripheral communication device. Also disclosed are various preferred features according to any one or more of claims 2-7.

There is disclosed a method of communication in an elevator operating environment. The method includes receiving a Bluetooth Low Energy (BLE) signal with a mobile device upon entering an operating environment that is proximate a plurality of elevator car locations. The method also includes allowing the mobile device to permit a connection to a single BLE access point device upon receipt of the BLE signal to request an elevator assignment from the BLE access point device, one of at least one BLE access point devices that are each connectable to the mobile device. The method further includes advertising and functioning the mobile device as a BLE peripheral device with data stored on the mobile device upon receipt of the signal, each BLE access point device being a BLE central communication device. The method yet further includes writing a request ID to the mobile device upon connection to the single connected BLE access point device. The method also includes denying subsequent request ID write attempts from BLE access point devices. Also disclosed are various preferred features according to any one or more of claims 9-15.

### BRIEF DESCRIPTION OF THE DRAWINGS

The present disclosure is illustrated by way of example and not limited in the accompanying figures in which like reference numerals indicate similar elements.
FIG. 1 illustrates an elevator communication system in an example embodiment;
FIG. 2 illustrates a user environment of the elevator communication system;
FIG. 3 schematically represents the elevator communication system; and
FIG. 4 is a flow chart illustrating a method associated with the elevator communication system according to an aspect of the disclosure.

### DETAILED DESCRIPTION

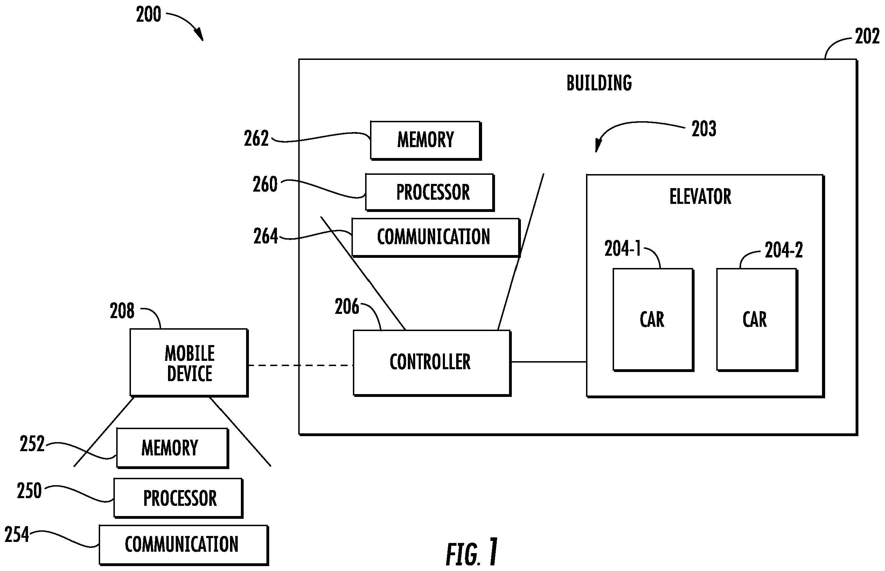

FIG. 1 depicts an elevator communication system 200 in an example embodiment. The elevator communication system 200 includes an elevator system 203 installed at a building 202. In some embodiments, the building 202 may be an office building or a collection of office buildings that may or may not be physically located near each other. The building 202 may include any number of floors. Persons entering the building 202 may enter at a lobby floor, or any other desired floor, and may go to a destination floor via one or more conveyance devices.

The elevator system 203 may include one or more computing devices, such as a controller 206. The controller 206 may be configured to control dispatching operations for one or more elevator cars (e.g., elevator cars 204-1, 204-2) associated with the elevator system 203. It is understood that the elevator system 203 may utilize more than one controller 206, and that each controller may control a group of elevator cars 204-1 and 204-2. Although two elevator cars 204-1 and 204-2 are shown in FIG. 1, it is understood that any number of elevators cars may be used in the elevator system 203. The elevator cars 204-1 and 204-2 may be located in the same hoistway or in different hoistways so as to allow coordination amongst elevator cars 204-1 and 204-2 in different elevator banks serving different floors. It is understood that other components of the elevator system 203 (e.g., drive, counterweight, safeties, etc.) are not depicted for ease of illustration.

Also shown in FIG. 1 is a mobile device 208. The mobile device 208 may include a device that is carried by a person, such as a smart phone, PDA, tablet, etc. The mobile device 208 may include wearable items, such as a smart watch, eyewear, etc. The mobile device 208 may include a processor 250, memory 252 and a communication module 254, as shown in FIG. 1. The processor 250 can be any type or combination of computer processors, such as a microprocessor, microcontroller, digital signal processor, application specific integrated circuit, programmable logic device, and/or field programmable gate array. The memory 252 is an example of a non-transitory computer readable storage medium tangibly embodied in the mobile device 208 including executable instructions stored therein, for instance, as firmware. The communication module 254 may implement one or more communication protocols, but must support a BLE peripheral role, as described in further detail herein.

The controller 206 may include a processor 260, memory 262 and a communication module 264, as shown in FIG. 1. The processor 260 can be any type or combination of computer processors, such as a microprocessor, microcontroller, digital signal processor, application specific integrated circuit, programmable logic device, and/or field programmable gate array. The memory 262 is an example of a non-transitory computer readable storage medium tangibly embodied in the controller 206 including executable instructions stored therein, for instance, as firmware. The communication module 264 may implement one or more communication protocols, but must support BLE communication in a BLE central role, as described in further detail herein.

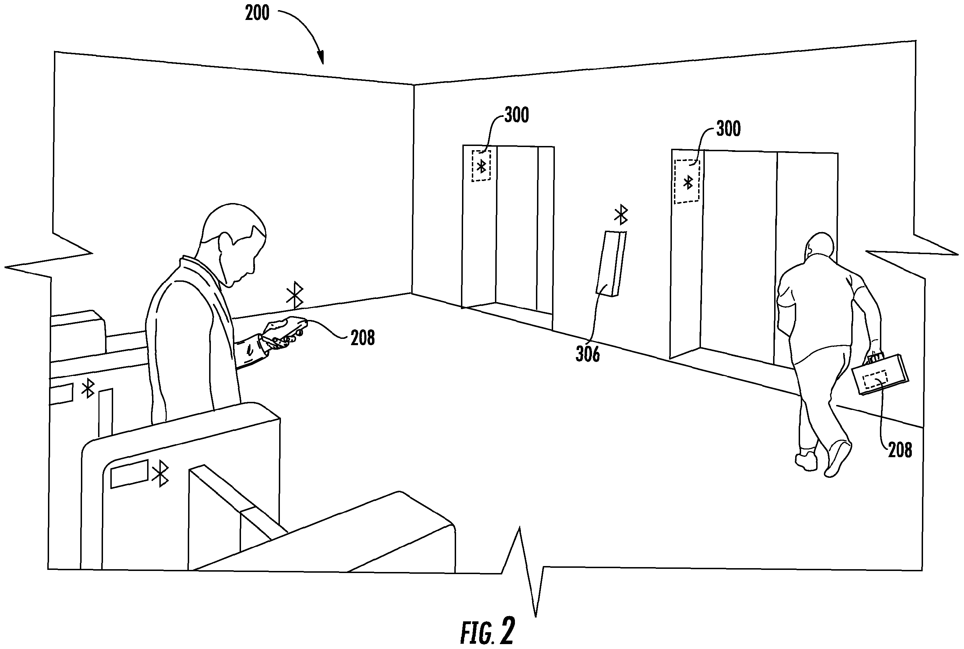

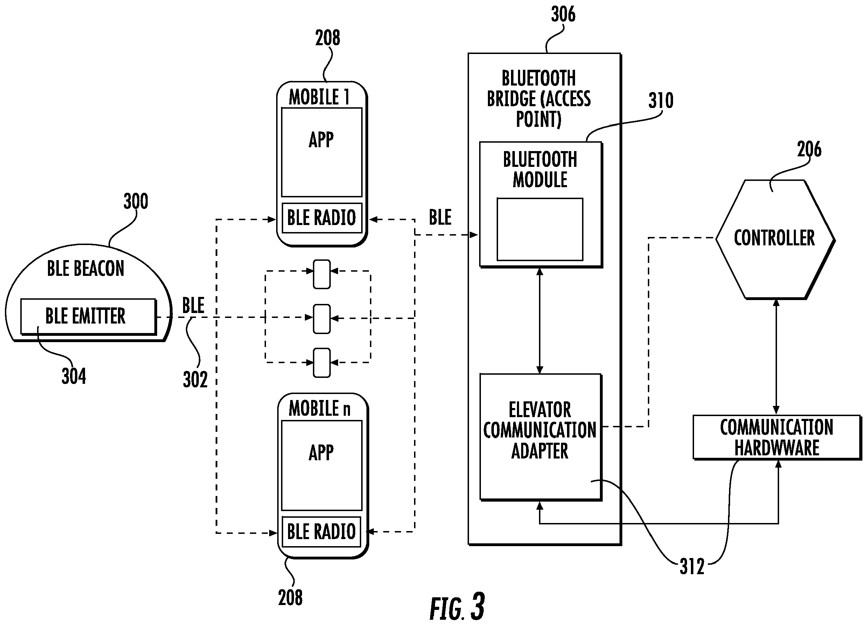

Referring now to FIGS. 2 and 3, an embodiment of the elevator communication system 200 is illustrated according to further aspects of the disclosure. In the illustrated embodiment, the mobile device 208 functions as a BLE peripheral device and one or more devices of the elevator communication system 200 functions as a BLE central device that initiates communication and interaction with the mobile device 208, as will be appreciated from the disclosure herein.

The above-described BLE peripheral device role of the mobile device 208 and the BLE central device(s) role of the elevator communication system 200 are reversed from typical systems. The role reversal of devices in this elevator system is both unique and a fundamental design advantage when deploying such a system in a public environment. If the mobile device 208 were in the central role it would take on the responsibility of managing connection to the system. With the mobile device 208 unable to intercommunicate, and mobile device placement in the lobby being uncontrollable and random, the flow of communication would be chaotic with mobile devices likely all connecting to the same BLE access point device, resulting in unnecessary communication traffic and collisions. In the system 200 disclosed herein, connection and processing of information is made from as many mobile devices as possible, as quickly as possible, via the wireless communication Bluetooth low energy (BLE) with short connection durations for each individual mobile device.

In the illustrated embodiment, at least one, but typically multiple BLE beacon devices 300 (also referred to herein as BLE wireless signal generating devices) are disposed in the system operating environment. Specifically, the BLE beacon devices 300 are located proximate an elevator boarding area. The BLE beacon devices 300 are deployed as separate devices in some embodiments for the purpose of enhancing the ability of the mobile device 208 to detect the presence of the BLE-enabled elevator communication system 200. The BLE beacon devices 300 emit a BLE signal 302 with a BLE emitter 304 that BLE-enabled mobile devices, operating in the usual BLE central mode initially can continuously search for, such as the mobile device 208 described herein, to trigger the mobile device 208 to change their operational mode from BLE central mode to BLE peripheral mode and enter a connection mode with the elevator communication system 200. Upon receipt of the BLE signal 302, the mobile device 208 advertises its presence with an additional BLE signal that is detectable by one or more nearby BLE access point devices 306 that are disposed in the system operating environment. Specifically, the BLE access point devices 306 are located proximate the elevator boarding area. The mobile device can also advertise its presence upon the user opening an application on the mobile device 208, or with the application open the advertising could be set to start only upon the user entering a request within the application on the mobile device 208. The mobile device 208 is connectable to the BLE beacon devices 300 and the BLE access point devices 306 when located proximate the elevator boarding area. In some embodiments, the mobile device 208 is connectable to the components when located within 100 feet, for example. It is to be appreciated that this distance/range is an illustrative range and some embodiments will permit connection with larger or smaller ranges.

One or more BLE access point devices 306 start to connect to the mobile devices advertising with a credential recognizable by the elevator communication system 200, as described herein. Only one BLE access point device 306 will complete the connection to the mobile device 208as the mobile device 208 will indicate that it has connected and prevent other connections from forming. The BLE access point device 306 may also be referred to as a bridge or a suitable alternative. One BLE access point device 306 is capable of handling multiple connections and therefore multiple mobile devices simultaneously. The BLE access point device 306 is part of, or is in operative communication with, the controller 206. It is to be appreciated that the overall system 200 may include a plurality of BLE access point devices 306 spaced from each other to facilitate operation of the system 200 over a desired distance range. In some embodiments, the BLE access point device 306 includes one or more BLE beacon device 300 integrated therein.

The BLE access point device 306 includes a BLE module 310 that receives the BLE signal 302 from the mobile device 208 to establish connection of the mobile device 208 to the BLE access point device 306. Upon connection, the mobile device 208 enters a request for an elevator assignment (i.e., elevator request, elevator call, hall call, destination call, etc.) that is received by the BLE access point device 306. The BLE access point device 306 communicates with the controller 206 in a wired or wireless manner via at least one communication device 312 that is integrated in the BLE access point device 306. A wired and wireless communication arrangement is illustrated for reference, but it is to be appreciated that both are not required in some embodiments. In particular, communication may be established only wirelessly or wired via communication hardware component(s) 312. The controller 206 responds with an elevator assignment for the mobile device 208 user and that assignment is relayed to the mobile device 208 by the BLE access point device 306. After receipt of the assignment, the mobile device 208 is disconnected from the BLE access point device 306. Disconnection may occur automatically by the BLE access point device 306 or may require manual termination by the mobile device 208 user via input on the mobile device 208.

The above-described embodiment of the method provides a single connection (transaction) between the BLE access point device 306 and the mobile device, but it is to be appreciated that the call (e.g., elevator request) and the assignment may be provided over two separate connections. The two connection architecture is advantageous in that the mobile user may be moving while making their elevator request. The first connection may be made through one BLE access point device 306 and they might walk out of range of that first BLE access point device 306 prior to receiving their elevator assignment. In this architecture, after the mobile device 208 enters the request to the original BLE access point device 306 the BLE access point device 306 disconnects from the mobile device 208 and the mobile device starts advertising again with a different signature that it is awaiting an elevator assignment. The elevator communication system 200 sends elevator assignments to all BLE access point devices allowing the second BLE access point device 306 that sees the waiting BLE advertisement to connect to and send the elevator assignment to the waiting mobile device 208.

In operation, the elevator communication system 200 provides users in the operating environment with a seamless and interactive elevator request experience. As shown in FIG. 2, a user simply enters the elevator boarding area with the mobile device 208 and one of the BLE beacon devices 300 triggers the mobile device 208 to enter into a connection mode based on user configuration data previously stored on the mobile device 208. An application on the mobile device 208 stores a list of universal unique identifiers (UUIDs) that are advertised by the BLE beacon device(s) 300. Recognizing one of the advertised UUIDs gives the application context information about the current building and floor. In some embodiments, based off this context and any user preferences stored about desired floor and times of day or days of the week for travel, the application informs the user it will be making a request and then makes a request for the floor on the user's behalf if the response is in the affirmative. In some embodiments, the application detects the floor and building context and makes a preprogramed request. In other words, in some embodiments, the mobile device 208 is pre-commissioned with a digital credential that enables it to communicate with specific BLE access point devices in a specific building. The BLE access point device 306 will communicate over an encrypted BLE channel to the mobile device 208 and authenticate the mobile device 208 based on the credential. The digital credential may also include an access control payload that is communicated along with the elevator request to the BLE access point device 306. The BLE access point device 306 communicates the request and access control payload to the elevator system that verifies with the access control system that the user with the access control payload is authorized to travel to the requested floor. The specific call may be based on a manual input by a user through an interactive application stored on the mobile device 208 in some embodiments. This may be done by physical contact between the user and an interactive surface (e.g., touch screen) of the mobile device 208 or through voice prompt commands. Alternatively, a user may input predetermined settings into the mobile device 208 that represent a floor destination, for example. This is particularly useful for individuals that often utilize the elevator system to travel to a single floor on a regular basis. Upon determination of an elevator assignment by the controller 206, the BLE access point device 306 relays the assignment to the mobile device 208 and it is displayed to the user. The assignment may also be displayed in alternative manners, such as on a watch or a wall display, for example. Traditional elevator systems do not assign users to specific elevators. For this case the message back to the user is a confirmation that their request has been accepted.

Advantageously, the elevator communication system 200 allows a user to step into an elevator boarding area (e.g., lobby) and receive an elevator assignment without interacting with anything other than their mobile device 208 and even then only doing so in a minimalistic fashion. Additionally, backups at system kiosks are reduced, thereby enabling better traffic flow to elevators. Use of the mobile device 208 as a BLE peripheral device, rather than a BLE central device, results in a better flow of communication between the mobile devices and the communication system.

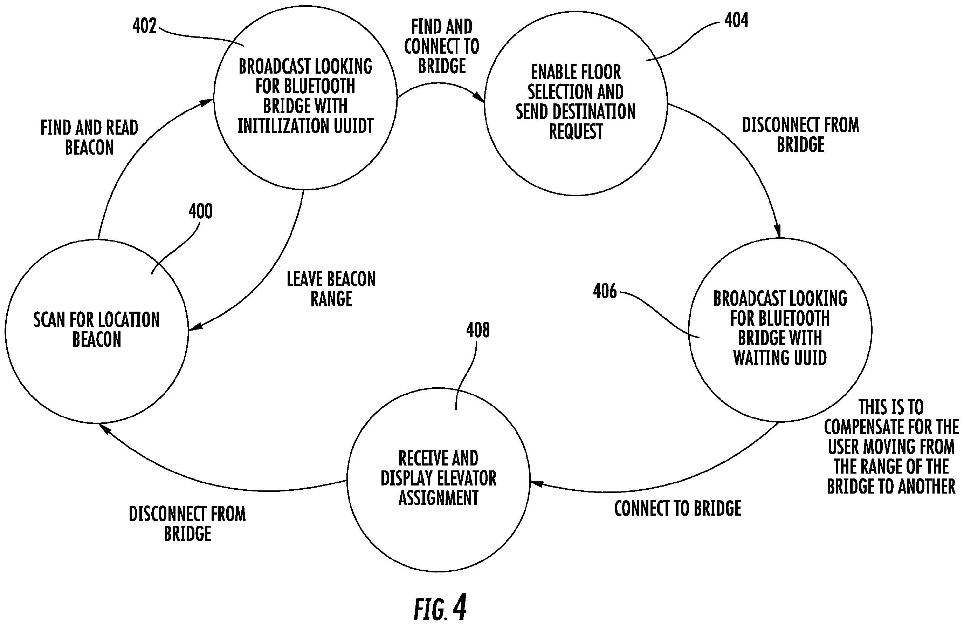

Referring to FIG. 4, the system 200 and method associated therewith are illustrated with a flow diagram. The flow diagram illustrates the method from the mobile device's perspective. The mobile device 208 scans for the BLE signal 302, as represented with 400. If within a predetermined range of the BLE beacon device 300, the BLE signal 302 prompts the mobile device 208 to advertise (i.e., broadcast) as a BLE peripheral, as represented with 402. State 402 can also be entered if the user makes a manual request from their mobile device. The advertisement seeks connection with a BLE access point device 306 with an initialization universal unique identifier (UUID). A connection is established between the mobile device 208 and the BLE access point device 306 and an elevator call is made 404. The connection may be delayed by a predetermined time period to prevent additional automatic calls, thereby avoiding lowering the efficiency of the system. Once the elevator call is received by the BLE access point device 306, the connection between the mobile device 208 and the BLE access point device 306 is terminated, but the BLE access point device 306, and any other BLE access point device 306 of the system 200, stores the UUID therein. The BLE access point device 306 can continue to serve other mobile devices that are connected at the same point in time. The mobile device 208 advertises its UUID to seek connection to one of the BLE access point devices of the system 406. Once the system has processed the request associated with the UUID, re-connection is established with the proper mobile device and the elevator assignment is written to the mobile device 408. Upon receipt of the elevator assignment, the mobile device is disconnected from the BLE access point device.

Since the mobile device 208 is advertising as a BLE peripheral in a location that is likely to have overlapping BLE central devices, such as multiple BLE access point devices, the issue of rapid connections by two or more central devices to the mobile devices is managed with the embodiments described herein. If such an issue was not addressed, the central devices may bombard the mobile device 208 with connections and cause phantom requests for elevators to occur in the system, adding unnecessary overhead in multiple locations in the system. Also, connection management avoids potentially overwhelming the operating system of the mobile device 208 itself.

The system 200 only allows connection between a single BLE access point device to each mobile device at a time. As described above, the mobile device 208 advertises a peripheral device with a UUID. Once connection with a BLE access point device 206 is established, a request ID is written to the mobile device 208. Once the mobile device 208 has a request ID written to memory stored thereon by the single connected BLE access point device, any subsequent request ID write attempts are denied by the mobile device 208. This may be done in any suitable manner. For example, the mobile device may employ BLE Generic Attribute Profile (GATT) errors to deny the write of the characteristic on any subsequent connection that occurs before the request ID characteristic value was advertised as a new service UUID. Although other techniques may be employed, BLE GATT errors may be employed due to the fact that BLE devices must include at least a basic GATT server that can respond to client requests, even if only to return an error response.

Advantageously, preventing elevator request duplication allows the system to operate more efficiently and in a manner that does not lead to additional system overhead or errors that frustrate users.

Embodiments may be implemented using one or more technologies. In some embodiments, an apparatus or system may include one or more processors, and memory storing instructions that, when executed by the one or more processors, cause the apparatus or system to perform one or more methodological acts as described herein. Various mechanical components known to those of skill in the art may be used in some embodiments.

Embodiments may be implemented as one or more apparatuses, systems, and/or methods. In some embodiments, instructions may be stored on one or more computer program products or computer-readable media, such as a transitory and/or non-transitory computer-readable medium. The instructions, when executed, may cause an entity (e.g., a processor, apparatus or system) to perform one or more methodological acts as described herein.

While the disclosure has been described in detail in connection with only a limited number of embodiments, it should be readily understood that the disclosure is not limited to such disclosed embodiments. Additionally, while various embodiments have been described, it is to be understood that aspects of the disclosure may include only some of the described embodiments. Accordingly, the disclosure is not to be seen as limited by the foregoing description, but is only limited by the scope of the appended claims.

## Claims

1. A communication system (200) comprising:
an operating environment proximate a plurality of elevator car locations; and
at least one Bluetooth Low Energy (BLE) access point device (306) connectable to a mobile device (208) located within the operating environment upon receipt of a BLE signal (302) by the mobile device, the mobile device permitting a single BLE access point device of the at least one BLE access point devices to connect to the mobile device at a time, for requesting an elevator assignment from the connected BLE access point device, the BLE access point devices each being a BLE central communication device and the mobile device being a BLE peripheral communication device.

2. The communication system (200) of claim 1, wherein the mobile device (208) has a request ID written to memory stored thereon by the single connected BLE access point device (306), and any subsequent request ID write attempts are denied by the mobile device upon receipt from at least one BLE access point device.

3. The communication system (200) of claim 2, wherein BLE GATT errors are employed by the mobile device (208) to deny any subsequent request ID write attempts from at least one BLE access point device (306).

4. The communication system (200) of any preceding claim, further comprising a controller (206) in operative communication with the at least one BLE access point device (306) to determine the elevator assignment to be communicated to the mobile device (208).

5. The communication system (200) of any preceding claim, further comprising a wireless signal generating device emitting the BLE signal (302) to be received by a mobile device (208) located within the operating environment.

6. The communication system (200) of claim 5, wherein the wireless signal generating device is integrated within at least one BLE access point device (306).

7. The communication system (200) of claim 5, wherein the wireless signal generating device is one of a plurality of wireless signal generating devices located within the operating environment, the wireless signal generating devices physically separated from at least one BLE access point device (306).

8. A method of communication in an elevator operating environment comprising:
receiving a Bluetooth Low Energy (BLE) signal with a mobile device (208) upon entering an operating environment that is proximate a plurality of elevator car locations;
allowing the mobile device to permit a connection to a single BLE access point device (306) upon receipt of the BLE signal (302) to request an elevator assignment from the BLE access point device, one of at least one BLE access point devices that are each connectable to the mobile device;
advertising and functioning the mobile device as a BLE peripheral device with data stored on the mobile device upon receipt of the signal, each BLE access point device being a BLE central communication device;
writing a request ID to the mobile device upon connection to the single connected BLE access point device; and
denying subsequent request ID write attempts from BLE access point devices.

9. The method of claim 8, wherein BLE GATT errors are employed by the mobile device (208) to deny any subsequent request ID write attempts from BLE access point devices (306).

10. The method of claim 8 or 9, further comprising a user initiating an elevator call with the mobile device (208), wherein initiation of the elevator call allows a connection of the mobile device and one of the BLE access point devices (306).

11. The method of claim 8 or 9, further comprising a user initiating an elevator call with the mobile device (208) upon connection to the BLE access point device (306).

12. The method of claim 10 or 11, wherein the elevator call is a hall call, or wherein the elevator call is a destination call.

13. The method of claim 10, 11 or 12, wherein the user initiates the elevator call by interacting with the mobile device (208), or
wherein the user initiates the elevator call by inputting predetermined settings into the mobile device.

14. The method of any of claims 8-13, further comprising communicating between the BLE access point device (306) and a controller (206) to determine the elevator assignment.

15. The method of any of claims 8-14, wherein the connection between the mobile device (208) and the BLE access point device (306) is established after a predetermined time period.

## Patentansprüche

1. Kommunikationssystem (200), umfassend:
eine Betriebsumgebung nahe einer Vielzahl von Aufzugkabinenstellen; und
zumindest eine Bluetooth-Low-Energy-(BLE-)Zugriffspunktvorrichtung (306), die mit einer mobilen Vorrichtung (208), die sich innerhalb der Betriebsumgebung befindet, bei Empfang eines BLE-Signals (302) durch die mobile Vorrichtung verbindbar ist, wobei die mobile Vorrichtung ermöglicht, dass zu einem Zeitpunkt eine einzelne BLE-Zugriffspunktvorrichtung der zumindest einen BLE-Zugriffspunktvorrichtung mit der mobilen Vorrichtung verbunden wird, um eine Aufzugzuweisung von der verbundenen BLE-Zugriffspunktvorrichtung anzufordern, wobei die BLE-Zugriffspunktvorrichtungen jeweils eine BLE-Zentralkommunikationsvorrichtung sind und die mobile Vorrichtung eine BLE-Peripheriekommunikationsvorrichtung ist.

2. Kommunikationssystem (200) nach Anspruch 1, wobei die mobile Vorrichtung (208) eine Anforderungs-ID geschrieben in Speicher, die darin gespeichert ist, durch die einzelne verbundene BLE-Zugriffspunktvorrichtung (306) aufweist, und jegliche anschließende Anforderungs-ID-Schreibversuche durch die mobile Vorrichtung bei Empfang von zumindest einer BLE-Zugriffspunktvorrichtung abgelehnt werden.

3. Kommunikationssystem (200) nach Anspruch 2, wobei BLE-GATT-Fehler durch die mobile Vorrichtung (208) eingesetzt werden, um jegliche anschließende Anforderungs-ID-Schreibversuche von zumindest einer BLE-Zugriffspunktvorrichtung (306) abzulehnen.

4. Kommunikationssystem (200) nach einem vorhergehenden Anspruch, ferner umfassend eine Steuerung (206) in Wirkkommunikation mit der zumindest einen BLE-Zugriffspunktvorrichtung (306), um die Aufzugzuweisung zu bestimmen, die der mobilen Vorrichtung (208) zu kommunizieren ist.

5. Kommunikationssystem (200) nach einem vorhergehenden Anspruch, ferner umfassend eine Vorrichtung zur Erzeugung eines drahtlosen Signals, die das BLE-Signal (302) emittiert, das von einer mobilen Vorrichtung (208) zu empfangen ist, die sich innerhalb der Betriebsumgebung befindet.

6. Kommunikationssystem (200) nach Anspruch 5, wobei die Vorrichtung zur Erzeugung eines drahtlosen Signals innerhalb zumindest einer BLE-Zugriffspunktvorrichtung (306) integriert ist.

7. Kommunikationssystem (200) nach Anspruch 5, wobei die Vorrichtung zur Erzeugung eines drahtlosen Signals eine aus einer Vielzahl von Vorrichtungen zur Erzeugung eines drahtlosen Signals ist, die sich innerhalb der Betriebsumgebung befinden, wobei die Vorrichtungen zur Erzeugung eines drahtlosen Signals physisch von zumindest einer BLE-Zugriffspunktvorrichtung (306) getrennt sind.

8. Verfahren zur Kommunikation in einer Aufzugbetriebsumgebung, umfassend:
Empfangen eines Bluetooth-Low-Energy-(BLE-)Signals mit einer mobilen Vorrichtung (208) bei Eintritt in eine Betriebsumgebung, die sich nahe einer Vielzahl von Aufzugkabinenstellen befindet;
Ermöglichen, dass die mobile Vorrichtung bei Empfang des BLE-Signals (302) eine Verbindung zu einer einzelnen BLE-Zugriffspunktvorrichtung (306) zulässt, um eine Aufzugzuweisung von der BLE-Zugriffspunktvorrichtung anzufordern, eine von zumindest einer BLE-Zugriffspunktvorrichtung, die jeweils mit der mobilen Vorrichtung verbindbar sind;
Bewerben und Betreiben der mobilen Vorrichtung als BLE-Peripherievorrichtung mit Daten, die in der mobilen Vorrichtung gespeichert sind, bei Empfang des Signals, wobei jede BLE-Zugriffspunktvorrichtung eine BLE-Zentralkommunikationsvorrichtung ist;
Schreiben einer Anforderungs-ID in die mobile Vorrichtung bei Verbindung mit der einzelnen verbundenen BLE-Zugriffspunktvorrichtung; und
Ablehnen anschließender Anforderungs-ID-Schreibversuche von BLE-Zugriffspunktvorrichtungen.

9. Verfahren nach Anspruch 8, wobei BLE-GATT-Fehler durch die mobile Vorrichtung (208) eingesetzt werden, um jegliche anschließende Anforderungs-ID-Schreibversuche von BLE-Zugriffspunktvorrichtungen (306) abzulehnen.

10. Verfahren nach Anspruch 8 oder 9, ferner umfassend, dass ein Benutzer einen Aufzugruf mit der mobilen Vorrichtung (208) initiiert, wobei die Initiierung des Aufzugrufs eine Verbindung der mobilen Vorrichtung und einer der BLE-Zugriffspunktvorrichtungen (306) ermöglicht.

11. Verfahren nach Anspruch 8 oder 9, ferner umfassend, dass ein Benutzer bei Verbindung mit der BLE-Zugriffspunktvorrichtung (306) einen Aufzugruf mit der mobilen Vorrichtung (208) initiiert.

12. Verfahren nach Anspruch 10 oder 11, wobei der Aufzugruf ein Flurruf ist oder wobei der Aufzugruf ein Zielruf ist.

13. Verfahren nach Anspruch 10, 11 oder 12, wobei der Benutzer den Aufzugruf durch Interagieren mit der mobilen Vorrichtung (208) initiiert, oder
wobei der Benutzer den Aufzugruf initiiert, indem zuvor festgelegte Einstellungen in die mobile Vorrichtung eingegeben werden.

14. Verfahren nach einem der Ansprüche 8-13, ferner umfassend das Kommunizieren zwischen der BLE-Zugriffspunktvorrichtung (306) und einer Steuerung (206), um die Aufzugzuweisung zu bestimmen.

15. Verfahren nach einem der Ansprüche 8-14, wobei die Verbindung zwischen der mobilen Vorrichtung (208) und der BLE-Zugriffspunktvorrichtung (306) nach einem zuvor festgelegten Zeitraum hergestellt wird.

## Revendications

1. Système de communication (200) comprenant :
un environnement d'exploitation à proximité d'une pluralité d'emplacements de cabine d'ascenseur ; et
au moins un dispositif de point d'accès Bluetooth de faible énergie (BLE) (306) pouvant être connecté à un dispositif mobile (208) situé dans l'environnement d'exploitation lors de la réception d'un signal BLE (302) par le dispositif mobile, le dispositif mobile permettant à un seul dispositif de point d'accès BLE de l'au moins un des dispositifs de point d'accès BLE de se connecter simultanément au dispositif mobile, pour demander une affectation d'ascenseur au dispositif de point d'accès BLE connecté, les dispositifs de point d'accès BLE étant chacun un dispositif de communication central BLE et le dispositif mobile étant un dispositif de communication périphérique BLE.

2. Système de communication (200) selon la revendication 1, dans lequel le dispositif mobile (208) a un ID de demande écrit dans une mémoire stockée dans celui-ci par le seul dispositif de point d'accès BLE connecté (306), et toute tentative d'écriture d'ID de demande ultérieure est refusée par le dispositif mobile à la réception d'au moins un dispositif de point d'accès BLE.

3. Système de communication (200) selon la revendication 2, dans lequel des erreurs du GATT BLE sont utilisées par le dispositif mobile (208) pour refuser toute tentative d'écriture d'ID de demande ultérieure provenant d'au moins un dispositif de point d'accès BLE (306).

4. Système de communication (200) selon une quelconque revendication précédente, comprenant en outre un contrôleur (206) en communication opérationnelle avec l'au moins un dispositif de point d'accès BLE (306) pour déterminer l'affectation d'ascenseur devant être communiquée au dispositif mobile (208).

5. Système de communication (200) selon une quelconque revendication précédente, comprenant en outre un dispositif de génération de signal sans fil émettant le signal BLE (302) devant être reçu par un dispositif mobile (208) situé dans l'environnement d'exploitation.

6. Système de communication (200) selon la revendication 5, dans lequel le dispositif de génération de signal sans fil est intégré dans au moins un dispositif de point d'accès BLE (306).

7. Système de communication (200) selon la revendication 5, dans lequel le dispositif de génération de signal sans fil est l'un d'une pluralité de dispositifs de génération de signal sans fil situés dans l'environnement d'exploitation, les dispositifs de génération de signal sans fil étant physiquement séparés d'au moins un dispositif de point d'accès BLE (306).

8. Procédé de communication dans un environnement d'exploitation d'ascenseur comprenant :
la réception d'un signal Bluetooth de faible énergie (BLE) avec un dispositif mobile (208) lors de son entrée dans un environnement d'exploitation situé à proximité d'une pluralité d'emplacements de cabine d'ascenseur ;
le fait de permettre au dispositif mobile de se connecter à un seul dispositif de point d'accès BLE (306) à la réception du signal BLE (302) pour demander une affectation d'ascenseur au dispositif de point d'accès BLE, l'un des au moins uns dispositifs de point d'accès BLE pouvant chacun être connectés au dispositif mobile ; l'avertissement et l'exploitation du dispositif mobile en tant que dispositif périphérique BLE avec des données stockées sur le dispositif mobile à la réception du signal, chaque dispositif de point d'accès BLE étant un dispositif de communication central BLE ;
l'écriture d'un ID de demande dans le dispositif mobile lors de la connexion à l'unique dispositif de point d'accès BLE connecté ; et
le refus de tentatives d'écriture d'ID de demande ultérieure provenant des dispositifs périphériques de point d'accès BLE.

9. Procédé selon la revendication 8, dans lequel des erreurs du GATT BLE sont utilisées par le dispositif mobile (208) pour refuser toute tentative d'écriture d'ID de demande ultérieure provenant des dispositifs de point d'accès BLE (306).

10. Procédé selon la revendication 8 ou 9, comprenant en outre un utilisateur initiant un appel d'ascenseur avec le dispositif mobile (208), dans lequel l'initiation de l'appel d'ascenseur permet une connexion du dispositif mobile et de l'un des dispositifs de point d'accès BLE (306).

11. Procédé selon la revendication 8 ou 9, comprenant en outre un utilisateur initiant un appel d'ascenseur avec le dispositif mobile (208) lors de la connexion au dispositif de point d'accès BLE (306).

12. Procédé selon la revendication 10 ou 11, dans lequel l'appel d'ascenseur est un appel de palier ou dans lequel l'appel d'ascenseur est un appel de destination.

13. Procédé selon la revendication 10, 11 ou 12, dans lequel l'utilisateur initie l'appel d'ascenseur en interagissant avec le dispositif mobile (208), ou
dans lequel l'utilisateur initie l'appel d'ascenseur en entrant des paramètres prédéterminés dans le dispositif mobile.

14. Procédé selon l'une quelconque des revendications 8 à 13, comprenant en outre la communication entre le dispositif de point d'accès BLE (306) et un contrôleur (206) pour déterminer l'affectation d'ascenseur.

15. Procédé selon l'une quelconque des revendications 8 à 14, dans lequel la connexion entre le dispositif mobile (208) et le dispositif de point d'accès BLE (306) est établie après une période de temps prédéterminée.
